# EUROPEAN PATENT SPECIFICATION

(11) **EP 3 324 725 B1**
(45) Date of publication and mention of the grant of the patent: **06.05.2020**
(21) Application number: 16762894.0
(22) Date of filing: 20.07.2016
(51) Int. Cl.: A01C 1/08, A01N 25/00, A23B 9/26

(54) **SEED TREATMENT**
SAATGUTBEHANDLUNG
TRAITEMENT DE SEMENCE

(30) Priority: 21.07.2015 NL 2015197
(43) Date of publication of application: 30.05.2018
(73) Proprietor: ThatchTec B.V., 6708 PW Wageningen (NL)
(72) Inventor: FEIL, Herman, 6708 PW Wageningen (NL); VAN LITH, Kenneth Wilhelmus, 6708 PW Wageningen (NL); WANG, Jingjue, 6708 PW Wageningen (NL); ROIG COLL, Salvador, 6708 PW Wageningen (NL)
(74) Representative: EDP Patent Attorneys B.V.
(86) International application number: PCT/NL2016/050541
(87) International publication number: WO 2017/014631

(56) References cited:
- EP-A2- 1 166 632
- WO-A1-2010/064903
- GB-A- 1 188 562

## Description

### FIELD OF THE INVENTION

The invention relates to a method for treating seeds.

### BACKGROUND OF THE INVENTION

Various methods for seed treatment are known in the art. EP 1 166 632, for instance, describes a method of controlling seed disease, wherein for the purpose of obtaining disease-free seeds of high quality by efficiently controlling a seed borne disease of seeds of vegetable crops, ornamental plants and other herbage, seeds are subjected to a physical or chemical sterilization to reduce a fungal or bacterial amount held by the seeds and then the thus sterilized seeds are treated by an effective microorganism which is antagonistic against a pathogen of the seed borne disease. Controlling effect and fixing property of the effective microorganism can be enhanced by using a plurality of fungal or bacterial strains thereof. Examples of such effective microorganisms include fungi or bacteria belonging to the genus Pantoea or the genus Leclercia which is antagonistic against the pathogen belonging to the genus Xanthomonas.

GB 1 188 562 describes a method of dressing seed to protect it against smut, comprising introducing the seed into a pressure tank, reducing the pressure therein so as to get aqueous steeping liquid drawn in which, under the action of the lower pressure, is uniformly absorbed by the seed, the temperature of the steeping liquid being such that, after mixing the steeping liquid with the mass of seed, the seed is at a temperature of from 4 to 47 °C, retaining the seed and liquid in the tank for up to 45 minutes, discharging the excess liquid and hermetically sealing the wetted seed in the tank or another tank so as to cause the wetted seed to be treated under anaerobic conditions at the acquired dressing temperature.

### SUMMARY OF THE INVENTION

For seed treatment, physical, chemical or biological methods are known in the art, varying from hot water or hot air treatments, to the use of chemical and biological fungicides and antibiotics. Many (physical) prior art methods to treat seed, however, require full control over the process conditions. Too high temperatures and/or a too long periods of exposure to high temperatures may negatively affect the shelf life or may even be detrimental to the seeds, whereas too low temperatures or exposure times may not bring the expected results regarding destroying the pathogens.

Chemical methods may bring phytotoxicity and/or reduced germination, and may further have the disadvantage of destroying all micro-organisms at or in the seeds; not just the pathogens but also the protective micro-organisms beneficial in protecting the seed during germination.

Biological methods, like applying organic fungicides and bactericides, may require other physical methods to be applied jointly. Further, most methods may negatively affect the environment, e.g. by bringing chemicals into the environment and or requiring an excess amount of energy.

Seed treatment methods based on heat, including steaming, or other sterilization treatments, may eradicate the complete microbiologic environment at or in the seed, therewith making the seeds susceptible to new micro bacterial attacks that again may result in a reduced germination. To improve the resistance of these treated seeds, inoculation the seeds with commercial aerobic fungi may be required.

Hence, it is an aspect of the invention to provide an alternative method for seed treatment, which preferably further at least partly obviate one or more of above-described drawbacks, and which are especially environmentally safe and cost saving. Further, especially it is an aspect to provide an alternative method for seed treatment which reduces pathogens on the seeds and/or improves the germination of the seeds.

In a first aspect, the invention provides a seed treatment method comprising (i) mixing starting materials comprising an aqueous liquid (especially water), anaerobic bacteria, a substrate (especially a nutrient medium) for the anaerobic bacteria, and seeds, to provide a mixture having a void volume between the seeds, wherein at least 50% of the void volume comprises the aqueous liquid; (ii) storing the mixture in a condition to prevent oxygen from entering the mixture during a treatment time, to provide treated seeds, wherein the treatment time is at least 6 hours and at maximum 14 days, and (iii) collecting the treated seeds from the mixture.

It has surprisingly been found that remarkably good results can be obtained by an environmental friendly method of seed treatment as described herein, in which a seed is provided to a matrix comprising anaerobic bacteria and a substrate, such as organic material, for the anaerobic bacteria and (successively) providing a (oxygen) barrier (as seal) between the mixture and the air or providing other means to prevent oxygen from entering the matrix. During a treatment time, the amount of pathogens at the surface and in the seeds is substantially reduced and the treated seeds may especially show an improved germination. Especially, the substrate provides a nutrient medium for the (anaerobic) bacteria to grow in the mixture. In an embodiment, the anaerobic bacteria especially comprise (anaerobic) bacteria of the phylum of Firmicutes. Further, the invention also provides (such) seeds obtainable by the method as defined herein. Such seeds may especially comprise reduced amounts of pathogens, an improved germination, and especially a biological environment at the seed being denominated by bacteria of the phylum Formicutes (see below).

In a second aspect the invention provides the use of the method as described herein for reducing the amount of pathogens at seeds and/or especially also to improve the germination of said seeds. In an embodiment, especially the germination improves with at least 20 % after the use of the method. The increase in germination may depend on the type of seed and the type of matrix (solid or liquid, see below) applied. The improvement may be over 50 % for some combinations of seed and matrix. The invention further provides the use of the method, wherein after treatment a ratio of bacteria to pathogens (at the seeds) is at least 10⁵ : 1.Hence, especially the invention provides the use of the method for providing a reduction of pathogens at the seeds (which can also (now) be indicated as "treated seeds", especially for providing (treated) seeds having a ratio of bacteria to pathogens being equal to or larger than at least 10⁵ : 1. Especially the biological environment at the seed after the treatment is dominated by bacteria of the phylum of Firmicutes. The pathogens are especially selected from the group consisting of virus, bacterium, and fungus. Herein the term "pathogen" especially relate to disease-producing agents, especially a virus, (and/) or a bacterium, (and/) or a fungus.

Based on the invention a (treated) mixture may be provided comprising an aqueous liquid, anaerobic bacteria, a substrate for the anaerobic bacteria and (treated) seeds, especially seeds treated by the method herein, especially comprising an oxygen concentration in a gaseous phase in the mixture being at maximum 3 vol.%.

Seed treatment and the method of seed treatment as described herein may especially comprise a method or process by which infection of seedlings and subsequent crops may be prevented (or at least reduced) by removing or destroying externally contaminated and/or internally seed-borne pathogens. Seed treatment may alternatively or additionally further aim at preventing (or at least reducing) germination failure and/or improving germination.

### DETAILED DESCRIPTION

Within agricultural and horticultural production, seed sanitation or seed treatment is crucial. Seed treatment is a technology to suppress and eliminate the seed-borne pathogen, it is important for growers to reduce the factors which can reduce the crop yields and therefore economic turnover. The most common ways for disinfect seeds are a hot water treatment and chemical soaking treatments. However, hot water treatment may decrease the ability of seed to germinate and chemicals can not only cause phytotoxicity, they may also be no option for organic growers and organic seed producing companies.

Hence, the present invention provides an alternative method that is especially environmentally safe and cost saving. The method may optionally be carried out without the use of any chemicals and may comprise a biologic (organic) method, though optionally chemicals may also be applied. Since the method may be applied at ambient temperature, it is a substantially energy neutral method as opposed to chemical methods (where energy is in general required to produce the chemicals) or thermal methods (using water, steam or hot air).

It is noticed that the seed treatment method described herein may not induce a complete "disinfection" or a substantial complete eradication of the pathogens. It was observed that when applying the method that there is especially a shift in population rather than a "killing" of all pathogens. This eradication of pathogens may exist but the treatment may also empower other populations, basically through a feeding process. It for instance was noticed that the presence of some undesired fungi, expressed as dark and grey spots, was minimized after treatment whereas new more desirable fungi (expressed as white moulds) developed after the treatment. Pathogens and beneficial micro-organisms are essentially always in equilibrium; they normally exist both e.g. in soils and in or at organisms. When pathogens become dominant, the equilibrium is broken.

Without the desire to be bound by theory, it is theorized that the seed treatment method as described herein especially comprises a first phase during the treatment method whereas especially a second phase starts at the end of the treatment or after the treatment method. The first phase may be called "the anaerobic shock" phase, which reduces the population of pathogens that require oxygen. The substrate/nutrient in the mixture may be a very good nutrient for all type of microbes. During the treatment time, traces of this nutrient and/or dead pathogens feed new populations. Thereby, the amount of pathogens may decrease substantially. After the first phase, a second phase may start wherein the situation is reversed (and oxygen is present again): the pathogens are weak through the anaerobic treatment and the beneficial micro-organisms, which may be more diverse than the pathogens (normally one or two types of microbes) have good nutrients and they grow, explaining the shift of population.

Especially, this treatment method as described herein does not result in aseptic conditions, as (in general) opposed to chemical methods. Actually, the method may decrease the number of pathogens and feeds the bio-diversity existing on the seed, generating more antagonism (aerobic now, as opposed to the first phase) and competence. In the presence of oxygen, a bacterial/fungi film may grow on the seed, which helps the seed to germinate. This film may act as an immunological (antagonistic) system against pathogens present in the soil. This competence is a back-up of the anaerobic treatment. Hence, there is no need to inoculate the seeds with commercial aerobic fungi to make them resistant, as may be required for instance after a steaming or heat seed treatment or another sterilization treatment.

Hence, the method especially may be based on: (i) starting with infected seeds with a (possible) presence of a pathogenic population of fungi, bacteria and viruses inside and/or outside of the seed, (ii) cleaning or sanitizing the seeds and establishing a new and more diverse microorganism environment at the seed by exposing the seeds to an (active) anaerobic environment created by adding a substrate (nutrient) to a matrix comprising the seeds and (anaerobic) bacteria, and (substantially) preventing oxygen from entering (the thus obtained mixture), (ii) establishing a further diversified microorganism film at the seeds by collecting the seeds and allowing contact between the seeds and air and thus allowing aerobic micro-organisms to grow again being fed by traces of nutrient still present at the seeds.

In the method as described herein, especially at least anaerobic bacteria are used. Since bacteria and other micro-organisms are frequently abundantly present in all different kinds of environments, the anaerobic bacteria may already be present in one of the components of the mixture, such as in the aqueous liquid or at outside and/or inside the seed. However, they also may be provided separately to mixture. The anaerobic bacteria, especially may already be comprised by the aqueous liquid, the seeds and/or other components of the mixture. Hence, phrases like "providing starting materials comprising anaerobic bacteria, ...." may refer to anaerobic bacteria that are provided to the starting materials because one or more of the starting materials (already) comprises anaerobic bacteria, it may (further) refer to providing a specific component comprising anaerobic bacteria, such as an anaerobic inoculum to the starting materials, or it may refer to both (having staring materials that already comprise anaerobic bacteria and providing a specific component comprising the bacteria.

Especially the aqueous liquid comprises substantially water. In an embodiment, the aqueous liquid comprises aqueous liquid withdrawn from a ditch. In another embodiment, the aqueous liquid comprises water from a water supply. In yet another embodiment, the aqueous liquid comprises water taken from a well. Hence, the aqueous liquid may comprise a pure liquid. The aqueous liquid may also e.g. comprise less than pure water and may comprise some sediments, solid materials and/or dissolved material.

The growth of (pathogenic) bacteria and/or other oxygen consuming micro-organisms present at and/or in the seeds and in the mixture will reduce the oxygen content in the mixture, (eventually) resulting in a low oxygen or possible anoxia environment. This change (in oxygen content) will break the dormancy of anaerobic bacteria present in the mixture, which now may work as biological control and provide an active anaerobic biochemical activity. Anaerobic bacteria may be antagonistic to some of the undesired micro-organisms that may be present at or in the seeds: their metabolism is toxic for the pathogens and they can even crack the pathogens, that means kill them and digest them.

Certain anaerobic bacteria may further inhibit fungi development because they may produce enzymes which are toxic for aerobic fungi and because the by-products of their metabolism i.e. fatty acids, sulphur based products, etc., negatively affecting the fungi. The seed treatment may decrease the fungi during the germination; may increase the seedling number of germination seeds, especially of dormant seeds, especially seeds with a length of at least 2.5 mm and a strong dormancy. Especially the strong dormancy may be the result of a hard and water impermeable coat. Strong dormancy may also be the result of germination inhibitors comprised in the coat. However, also the seed treatment may increase the seedling number of small seeds, with a size smaller than 2.5 mm, such as smaller than 1.5 mm or even smaller than 1 mm. The seed treatment further may increase the seedling number of seeds not comprising a strong dormancy and/or of seeds comprising a soft coat (like cereals). Improved germination after the treatment was observed as an improvement of germination in numbers and also as an improvement in the speed of germination.

It is surprisingly found that the low oxygen state is easily provided. This may be due to the high biological oxygen demand (BOD) of the substrates used. The BOD value is a measure of the amount of oxygen consumed by the microorganisms when degrading an organic material. If a substrate has a high BOD value, a large amount of oxygen is consumed during its degradation, and the anaerobic conditions needed for the seed treatment are ensured quickly and effectively. Furthermore, the decomposition products formed in the anaerobic degradation of the substrates in the mixture, such as for example methane (CH₄), carbon monoxide (CO) and hydrogen sulfide (H₂S), also seem to play an important role in the destruction of the harmful organisms present in the matrix at or in the seeds.

It has now surprisingly been found that remarkably good results can be obtained by a method of seed treatment in which the substrate comprises non-living organic material and a barrier is applied between the mixture and the air to prevent oxygen from entering the mixture.

The term "barrier" may especially refer to a layer to prevent oxygen to pass through the layer (and reach the mixture). Hence, a barrier may comprise any kind of (substantially) oxygen impermeable material. A barrier may comprise a (substantially oxygen impermeable) solid material, such s a polymer or a metal. Alternatively or additionally, a barrier may comprise a (substantially oxygen impermeable) liquid or solid, such as water, an oil or a fat. The barrier may comprise a film material, but it also may comprise a more rigid material, such as a rigid polymer. For instance if the starting materials may be mixed in a container, the container may be closed by a rigid material, such as a plastic lid, but also a metallic lid or any other kind of material that may prevent oxygen from entering the mixture during treatment time. The barrier may also comprise a seal. Examples of possible seals include e.g. a film material, a coating, a covering layer, a foil, etc.. Hence, in an embodiment the term "barrier" especially refers to a layer, such as a barrier layer.

In an embodiment, the barrier (layer) comprises an aqueous liquid and the mixture is (thus) sealed by (a layer of) aqueous liquid preventing oxygen from entering the mixture. In a further embodiment, the mixture is covered by a layer comprising polymer coating to prevent oxygen from entering the mixture. The barrier may also comprise an enclosure, especially an oxygen impermeable enclosure. Examples of possible enclosures include for instance a (plastic) bag, a bucket, a container, etc. allowing substantially to enclosing a mixture completely and which may substantially prevent oxygen from entering the enclosure (and thus the mixture when enclosing the mixture).

Hence, the barrier used or any other kind of means to prevent oxygen to enter the mixture is preferably essentially impervious to oxygen. In an embodiment, a plastic film is used in particular as the barrier. The barrier is arranged in particular to create substantially anaerobic conditions in the mixture under it. According to one of the advantageous embodiments of the present invention, the barrier is made of a plastic. The term "plastic" also covers film materials here. The plastics and films that can be used to apply a barrier between the matrix and the air are exemplified by low-density polyethylene (LDPE), high-density polyethylene (HDPE), nylon, multi-ply barrier film (such as Hytibarrier film), biodegradable film and plastics, as well as spray- on plastics or other spray-on film-forming agents.

The amount of the substrate and the nature of the barrier are preferably so chosen that - in the course of preferably at least a number of hours or days, such as at least 12 hours or at least 2 days (also optionally depending on the mixture consistency, see below) - the oxygen content of the air in the mixture under the barrier is of the order of magnitude of at most 2 vol.% and especially at most 1 vol.%, such as at most 0.5 vol.%. For example, in a mixture essentially comprising solids, it can drop below about 2 vol.% about 2 days after introduction and coverage, and it can remain the same preferably for at least 2 consecutive days and preferably for at least 5 consecutive days. In one of the embodiments, the barrier used preferably has an oxygen transmission rate (OTR) of at most 2000 ml of oxygen per square meter per hour, i.e. an OTR value of at most 2000 ml/m²/h. In a specific embodiment, the OTR value is at most 1500 ml/m²/h. With polyethylene (PE), it is possible to achieve an OTR value of at most 1400 ml/m²/h, which can create good anaerobic conditions.

The method according to the invention and its variants ensure a more environmental friendly and reliable seed treatment. Seed treatment carried out by the method according to the present invention can also lead to a higher yield because of the improved germination of the seeds after the treatment.

The substrate especially comprises a protein-containing material. More especially, the substrate contains at least 10 wt.% of protein, calculated on a dry-matter basis, especially at least 15 wt.% of protein, such as at least 20 wt.% of it. In some specific embodiments, the substrate contains at least 50 wt.% of protein on a dry-matter basis, and especially at least 70 wt.% of protein, in the form of for example wheat gluten or maize gluten. In another embodiment, preferably at least 0.5 gram of protein is comprised per liter of mixture, and more preferably at least 1 gram of protein per liter of mixture, such as at least 2, at least 4 and especially at least 10 grams of protein per liter of mixture. In particular, the amount of protein introduced into the mixture per liter of mixture is 0.5 - 50 g, such as 1 - 50 g, especially 2 - 50 g and more especially 4 - 50 g, such as 4 - 40 g.

In one of the embodiments of the present invention, furthermore, the substrate used only contains a small amount of carbohydrates, especially rapidly degradable carbohydrates, such as carbohydrates comprising monosaccharides and/or polysaccharides with α1→4 linkages. The substrate preferably comprises at most 30 wt.% and more preferably at most 20 wt.% of rapidly degradable carbohydrates, calculated on a dry-matter basis. Higher amounts can quickly acidify the mixture, inhibiting the treatment.

In an embodiment of the method, a substantial part of the starting materials may comprise an aqueous liquid. The void volume between the seeds is at least 50% filled with the aqueous liquid. In a further embodiment at least 75%, such as 80%, such as 90%, or substantially 100% of the void volume between the seeds comprises an aqueous liquid. In yet a further embodiment the seeds are submerged in the aqueous liquid.

The term "void volume" refers to that volume of the mixture that is not occupied by the seeds. Would perfectly spherical seeds be used, and would a closed packing be obtained, than the void volume would be (100-74.048)% of the total volume. Would only an aqueous liquid be added, then this void volume could be filled for 100% with aqueous liquid. Would a mixture be used with solids (in addition to the seeds), the void volume may be much larger. In such instance, the void volume may be filled with less than 100% aqueous liquid. For instance, would the seeds be embedded in a sludge, the void volume may only partly be occupied by the aqueous liquid (from the sludge). (the rest especially being solids, anaerobic bacteria, substrate, and optionally some gas, such as CO₂). In fact, the term "void volume" may also refer to inter-seed volume, as it refers to all volume in the mixture between the seed, but this void volume may (and will in general) be filled with aqueous liquid, substrate and anaerobic bacteria.

In another embodiment, the starting materials further comprise a solid material. In an embodiment only a small part of the starting materials may comprise the aqueous liquid and a substantial part of the starting materials comprise the solid material. Especially, in such embodiment the mixture may be moist, or humid (wherein the aqueous liquid is substantially absorbed by and between the solid materials), but not submerged in aqueous liquid or wet (wherein the aqueous liquid may be identified as free flowing or pools etc.). Especially the terms "humid" and "moist" may relate to a mixture that especially comprises such an amount of liquid, that the liquid will not drain or trickle out of the mixture spontaneously (at ambient temperature).

A mixture comprising a substantial part of aqueous liquid may also herein be referred to as comprising a "liquid matrix", whereas a mixture comprising a substantial part of solid material may also referred herein as comprising a "solid matrix" (moreover, also the terms "mixture" and "matrix" may be used interchangeably herein). Especially, when applying a liquid matrix, it may be advantageous to apply a liquid (substrate) or pourable substrate. However, also a solid substrate, such as optionally a particulate substrate, may be used, especially a solid substrate that dissolves easily in the liquid matrix. However, also a solid substrate that dissolves gradually and slowly releases its nutrients may be advantageously applied in the liquid matrix. In the liquid matrix, the void volume comprises water for at least 50% of the void volume, whereas in the solid matrix the void volume in comparative embodiments may especially comprise water for less than 50% of the void volume.

In an embodiment comprising a liquid mixture, the substrate, and optionally anaerobic bacteria, and the seeds are especially provided to the aqueous liquid and mixed to provide the mixture.

It may also be advantageous to add that many seeds to the mixture as possible, while still comprising a liquid matrix, wherein the seeds are submerged in the aqueous liquid and completely covered by the aqueous liquid. Hence, in an embodiment the amount of aqueous liquid comprised in the mixture is selected to provide at least a mixture wherein the seeds are submerged in the aqueous liquid. In the liquid mixture, the aqueous liquid comprises especially aqueous liquid that may freely flow and is not physically restricted to flow. In an embodiment, the seeds are flooded (especially completely covered with aqueous liquid); herein also indicated as "submerged in aqueous liquid". In a liquid matrix, at least part of the aqueous liquid may freely flow and may not be attracted or be (chemically or physically) bound to the rest of the matrix. At least part of the aqueous liquid may further (if not covered by a barrier) vaporize as easy from the mixture as it would vaporize from a pool of aqueous liquid (under the same conditions). In further embodiments, at least 95 vol.% of the starting materials comprises seeds.

Hence in an embodiment the water activity of the matrix (a_{w}), is substantially 1. Water activity being defined as the ratio of the water-vapour pressure in a substrate (herein being the mixture) to the water-vapour pressure of pure water at the same temperature. Especially when applying a liquid matrix, an oxygen reduction in the mixture (the liquid matrix) may be established rapidly, especially when preventing oxygen entering the mixture (by providing an oxygen barrier and by sealing the mixture). It also has surprisingly been found that the anaerobic bacteria are more active and ready in a liquid matrix than in a solid matrix (see below) and hence the treatment time may be less in a liquid matrix than in a solid matrix. In a liquid matrix, the treatment time especially may also be not too long, otherwise seeds may get ready to germinate since they already absorb water. The seeds, however, are under anaerobic condition, preventing them to start germination because they (especially) cannot germinate without oxygen. A long treatment time, especially a treatment time over 48 hours may cause most of the types of seeds to decay resulting in a decrease in germination later on. However, some seeds may be more resistant to aqueous liquid and a longer (over 48 hours) treatment time may be selected. Hence, in an embodiment (comprising a liquid matrix) a treatment time is selected of at least 48 hours. Especially when applying a liquid matrix, it further may be advantageous to select the pH of the liquid matrix, especially a pH in the range of 4 - 9, especially at least 5, and especially at the most 8, that may affect the cultivation of anaerobic bacteria and therewith selectively affecting the type of bacteria through changes in the environment. Hence, instead of the term "liquid matrix" also the term "liquid mixture" may be applied.

As indicated above, the treatment time is at least 6 hours. In a further specific embodiment, the treatment time is at maximum 14 days. In comparative embodiments, the treatment time may even be 28 days.

Hence, in an embodiment, the invention provides the seed treatment method, wherein the seeds are completely covered by the aqueous liquid (especially submerged), especially wherein the pH is selected in the range of 4 - 9, especially in the range of 5 - 8, and especially wherein the treatment time is selected from the range of 12 - 96 hours, especially in the range of 12 - 48 hours, such as 24 - 48 hours. In an embodiment comprising seeds that are completely submerged in the aqueous liquid, especially also substantially 100% of the void volume (between the seeds) may comprise the aqueous liquid. Especially the term "void volume" relates to a ratio of i) a total volume of the mixture minus a total volume of the seed (in the mixture) to ii) the total volume of the mixture.

When applying a liquid matrix, the treated seeds may especially be easily collected from the mixture after the treatment for instance by means of a sieve or a water (liquid) permeable (but substantially seed impermeable) screen. Further it may be advantageous to perform the method in a (air/oxygen) sealable vessel, such as a bucket with a lid or larger sealable container. It further may be advantageous to remove oxygen from the container or vessel by degassing or providing a vacuum to the vessel or container.

Yet in another embodiment, the invention provides the seed treatment method wherein a solid matrix is applied. Especially a solid matrix is provided if the starting materials further comprise an amount of solid material and wherein the aqueous liquid is substantially fixated in the matrix in stead of free flowing. The solid material especially may function as a matrix to hold the seeds and to allow transport of bacteria and substrate. The amount of solid material, therefore, may depend on the physical parameters (such as the amount of the aqueous liquid bound to the solid material) of the solid material.

In an embodiment the starting materials may comprise about 72 - 77 wt.% sandy soil, wherein the starting materials further may comprise about 8.5 - 13 wt.% aqueous liquid, and especially about 14 - 15 wt.% seeds. In another embodiment the starting materials comprises about 78 - 83 wt.% sandy soil, and about 9 - 14 wt.% aqueous liquid, and especially about 7 - 8 wt.% seeds. In another embodiment the starting materials may comprise about 55 - 65 wt.% loamy soil, about 21 - 30 wt.% aqueous liquid, and especially about 14 - 15 wt.% seeds. In yet another embodiment the starting materials may comprise about 60 - 70 wt.% loamy soil, and about 23 - 32 wt.% aqueous liquid, and especially about 7 - 8 wt.% seeds. In yet another embodiment the starting material comprises about 34 - 57 wt.% clay, 7 - 15 wt.% seeds and 28 - 58 wt.% aqueous liquid. In further embodiments, the starting materials may comprise at least 5 wt.% seeds, such as at least 10% wt.% seeds, especially at least 15 wt.% seeds, even more especially at least 20 wt.%. In even further embodiments, the starting materials comprise at maximum 95 wt.% seeds, such as at maximum 75 wt.% seeds, especially at maximum 50 wt.% seeds. Especially, the amount of seeds in the starting materials may be selected in the range of 1-95 wt.%, such as 2- 50 wt. %, especially 5-25 wt.%., even more especially 5-15 wt.%.

The total weight of solid material relative to the total amount of the starting materials may especially be selected to be larger than the total weight of the aqueous liquid (relative to the total amount of starting material). By selecting the solid material, appropriate ratio aqueous liquid : solid material may be selected. Especially, the solid wt.% is selected to be at least two times the aqueous liquid wt.%, especially at least 4 times the aqueous liquid wt.%. In a further embodiment, the total of the starting materials excluding (the weight of) the seeds may especially comprise about 80 wt.% solid material and about 20 wt.% aqueous liquid.

In an embodiment, the starting materials excluding (the weight of) the seeds may comprise 50 - 90 wt.% solid material and 10 - 50 wt.% aqueous liquid. In a further embodiment, the solid material comprises one or more solid materials selected from the group consisting of a sandy soil, a loamy soil, and a clay. Hence, in an embodiment, the solid material comprises one or more solid materials selected from the group consisting of sandy soil, loamy soil, and clay, and the starting materials excluding (the weight of) the seeds comprises 50 - 90 wt.% solid material, wherein especially the starting materials excluding (the weight of) the seeds comprises 10 - 50 wt.% aqueous liquid. In another embodiment the starting materials excluding the (weight of the) seeds may comprise about 10 - 15 wt.% aqueous liquid and about 90 - 85 wt.% sandy soil. In yet another embodiment, the starting materials excluding the (weight of the) seeds may comprise about 25 - 35 wt.% aqueous liquid and about 75 - 65 wt.% loamy soil. In yet another embodiment, the starting materials excluding the (weight of the) seeds and other optional components may comprise about 37 - 50 wt.% aqueous liquid and about 63 - 50 wt.% clay. Hence in an embodiment, the solid material comprises a solid material selected from the group consisting of sandy soil, loamy soil, and clay, and the starting materials excluding the seeds comprises sandy soil selected from the range of 10 - 15 wt.%, or loamy soil selected from the range of 25 - 35 wt.%, or clay selected from the range of 37 - 50 wt.%. Especially, in these embodiments the difference between 100 wt.% and the given amount of solid material may comprise aqueous liquid (wherein the total 100 wt.% excludes the seeds). In a further embodiment, the solid material comprises one or more solid materials selected from the group consisting of sandy soil and loamy soil, and the starting materials excluding (the weight of) the seeds comprises 65 - 90 wt.% solid material, wherein especially the starting materials excluding (the weight of) the seeds comprises 10 - 35 wt.% aqueous liquid. Such embodiments, especially may be relevant for embodiments comprising a solid matrix.

Especially, in an embodiment a ratio solid material/aqueous liquid is selected to provide a moist mixture, wherein the aqueous liquid is especially substantially fixated in the mixture, especially the mixture does not comprise free flowing aqueous liquid. Especially, the water activity of such a mixture (comprising a solid matrix) is less than 1. However, the water activity is preferably at least 0.91, especially at least 0.95 to enable growth of the anaerobic bacteria. Hence, in an embodiment, the starting material further comprises a solid material, wherein the water activity (a_{w}) of the mixture is selected from the range of 0.95 - 0.99. It is noted that the solid material may be provided comprising water (such as humid solid material or moist solid material) and hence the solid material may also provide extra aqueous liquid to the starting materials. The solid material may especially be selected to allow the treated seeds to be collected again from the mixture, after the treatment time.

Hence, the solid material especially comprises one or more of sand, soil, sandy soil, loamy soil, perlite, growing substrate. The solid material may also comprise organic matter (such as in the case of soil).

Further, especially the solid material comprises (small) particles, such as wherein especially the size of the (small) particles deviates from the (mean) size of the seeds to facilitate separation of the treated seeds. The smallest dimension of (substantially) each of the particles of the solid material, such as at least 90 wt.% of the solid material, may for instance be less than, such as at maximum 95%, such as at maximum 90%, such as at maximum 75% or even at maximum 50%, of the smallest dimension of the seeds, to allow a substantial adequate collection of the seeds (after treating) by means of a screen or a sieve. Herein smallest dimension especially is the smallest value of the diameter, width, height, or length, being the functional dimension determining whether a particle (or seed) will pass a screen or sieve or may not pass the sieve or screen. However, substantially adequate collection of the seeds (after treating) by means of a screen or a sieve may also be obtained if the smallest dimension of each of the particles is larger than, such as at minimum 105%, such as at minimum 110%, such as at minimum 125%, or even at minimum 200% of the smallest dimension of the largest seed.

Also other techniques to separate the (treated) seeds from the solid particles are known in the art that may be applied. For instance, the separation may be performed by means of air classification based on especially a density difference between the particles and the seeds.

In an embodiment, the minimum dimension of the seeds is selected in the range of 0.1 - 50 mm, such as 0.1 - 20 mm, like 0.1 - 10 mm, like 0.5 - 10 mm, such as 1 - 10 mm, like 2.5 - 10 mm. In other words, especially seeds may be applied having a minimum dimension selected from the range of 0.1 - 50 mm, such as 0.1 - 20 mm, like 0.1 - 10 mm like 0.5 - 10 mm, such as 1 - 10 mm, like 2.5 - 10 mm. Hence, especially a small seed having a minimum dimension such as diameter, thickness, height, or length, which ever being smallest, of 0.1 mm may be separated from the solid material by means of a screen especially if all particles of the solid material have a smallest dimension being larger than (are larger than) 0.1 mm, such as 0.2 mm or 1 mm, wherein the seed may pass the screen. However, said seed may also be separated by a screen form solid particles that are substantially all smaller than 0.1 mm, wherein the particles may pass the screen. The dimensions, such as smallest dimensions, are especially determined on a weight averaged basis (of the respective material or combination of materials). Hence, at least 50 wt.% of the seeds may have an number averaged particle size that differs at least 10%, even more especially at least 25%, such as yet even more especially at least 50%, of at least 50 wt.% of the solid material.

The solid material, especially soil, may also function as carrier of the required anaerobic bacteria, so much less anaerobic bacteria or substantially no anaerobic bacteria may (additionally) have to be introduced in the mixture. Therefore it may especially be advantageous if the solid material comprises soil. Hence in an embodiment, the solid material comprises one or more of soil and sand.

In an embodiment the solid material comprises local soil. The term "local soil" refers to soil from local natural area. Especially by using local soil, especially soil from a natural area with rich plant diversity, a rich diversity of soil microorganisms may be comprised in the solid material and provided to the mixture.

The soil may include the most relevant microorganisms for the seed. Also an anaerobic inoculum may for instance be prepared with local soil, and successfully be applied in a liquid matrix or added to a solid matrix. Especially, in a further embodiment an anaerobic inoculum providing at least part of the anaerobic bacteria may be comprised by the starting materials. Especially, the bacteria used in the method may stem from the soil. In embodiments the soil may be used directly (as it already comprises the anaerobic bacteria). However, especially the (local) soil may (also) be enriched with the anaerobic bacteria, i.e. has a higher bacterial activity than the (local) soil in general has. Further, as indicated above, the (local) soil is enriched with the substrate for the bacteria.

In embodiments, an anaerobic inoculum may be prepared by adding a nutrient, such as the substrate described herein and optionally minerals to a soil to bio-augment and activate the soil bacteria that after a certain period then may be extracted from the soil (especially in a liquid) to provide an (anaerobic) inoculum. Especially, in an embodiment at least a part of the anaerobic bacteria in the mixture is provided by an anaerobic inoculum, especially an anaerobic inoculum prepared from (local) soil.

In embodiments comprising the solid matrix, the aqueous liquid especially may be present as a substantially continuous phase in the matrix (in between the solid particles and the seeds) (although bound to the matrix), enabling a transport of bacteria and substrate for the bacteria. When required and for instance when using a substantially solid substrate, the aqueous liquid further may dissolve the substrate.

In a comparative examples, the weight of the predetermined amount of the aqueous liquid is about 20% of the total weight of the solid material and the aqueous liquid. It further may be advantageous to lower the oxygen content in the matrix, especially in a solid matrix, before adding the seeds to the matrix.

Hence, based on the invention further a seed treatment method may be provided (wherein the starting materials further comprise a solid material), wherein the method comprises (i) mixing the solid material, the anaerobic bacteria, the substrate for the anaerobic bacteria, and at least a part of the amount of the aqueous liquid to provide a pre-mixture, (ii) storing the pre-mixture during a settling time, especially a settling time selected from the range of 3 - 14 days, especially from the range of 7 - 14 days, in a condition to prevent oxygen from entering the pre-mixture, at least until an oxygen concentration in the gaseous phase of the pre-mixture of at maximum 3 vol.%, (iii) and mixing the seeds, the remainder of the amount of the aqueous liquid and the pre-mixture to provide said mixture.

During the settling time the oxygen content in the pre-mixture may be monitored continuously, or for instance every 3 or 6 hours, or every day, etc., to determine when to stop and to start mixing the pre-mixture with the remainder of the starting materials. However, the settling time may also be known from previous runs. Preferably the composition of the pre-mixture is selected to provide an oxygen concentration in the gaseous phase of less than or equal to 3% in less than 4 days, especially in less than 2 days. However a settling time of up to about 7 days may also be advantageously applied, to further increase the number of anaerobic bacteria. By applying a pre-mixture and a settling time to lower the oxygen content in the pre-mixture to values lower than 3 vol.% (in the gaseous phase) and to increase the number of anaerobic bacteria in the mixture, the treatment time may be reduced to obtain comparable results to not using a pre-mixture. The method comprising a pre-mixture may also advantageously be used to improve the result of the (successive) treatment, while applying the same treatment time. In embodiments comprising the pre-mixture (and a settling time) the treatment time is reduced (compared embodiments not comprising a pre-mixture). In other embodiments comprising the pre-mixture (and a settling time) the treatment time is selected to be the same compared to an embodiment comprising substantially the same mixture and not comprising a pre-mixture. Especially however, the treatment time is at least 3 days when applying the solid matrix. Although longer treatment times may be required, the treatment time is less or equal to 14 days. Hence, in a further embodiment, wherein the starting materials further comprise a solid material, the treatment time is selected from the range of 3 - 14 days, especially from the range of 7 - 14 days.

The pre-mixture may comprise a substantial part of the solid material. The pre-mixture may also comprise a substantial part of the liquid material. For instance, the liquid or solid material may fist be pre-treated to substantially reduce the oxygen content. In an embodiment, the seeds are mixed with the pre-mixture to provide the herein described mixture.

Hence, in a specific embodiment, the (collected and) treated seeds are enclosed in a sealed container or other storage means during storage to prevent oxygen from entering. However, in another embodiment, the (collected and) treated seeds are stored in a container, a bag a box or any other storage means without a substantial oxygen barrier. The seeds, thus, also may only be shielded from oxygen during the treatment time when comprised in the mixture. Especially the mixture comprising soil or sand may be covered by a barrier, especially a coating or a plastic film during the treatment time to prevent oxygen entering the mixture. Hence, in an embodiment, the mixture at least during the treatment time is covered by a (oxygen) barrier (layer) selected from a coating, a liner, a plastic, a plastic foil, a metal, and concrete to prevent oxygen from entering the mixture. Such a barrier (layer) may comprise one or more of a sheet, a foil, a film, a wall, and a floor to cover and/or enclose the mixture. It may also comprise a combination of e.g. a lid of a container and a container. A barrier may also comprise a combination of other elements such as a combination of a plastic and concrete or other surfaces, for instance if the mixture is spread out over (especially totally covering) a concrete floor or other surface (either directly at the floor or at a floor (also) covered with a barrier, such as a foil) and successively a (second) barrier is placed over the mixture. In a further embodiment the mixture is covered by a hermetically closed container. In yet another embodiment, the mixture is treated in a grain silo. In a further embodiment the mixture is covered by walls and hatches of a cargo hold of a ship, wherein the treatment may be carried out in the cargo hold during transport. In a further embodiment, the invention provides the seed treatment, wherein the mixture at least during the treatment time is contained in a (sealed) container to prevent oxygen from entering the mixture. This embodiment may be applied for both the liquid matrix as well as the solid matrix, so with or without the further comprised solid material in the starting materials. To facilitate the oxygen reduction process during the treatment time and/or the settling time, a container containing the mixture and/or pre-mixture may be evacuated and maintained at a pressure below atmospheric pressure. Hence, a further embodiment comprises a (sealed) container comprising the mixture (and optionally the pre-mixture). Especially the method further comprising evacuating the container and maintaining the container at a pressure below 1 bar during at least part of the treatment time (and optionally at least part of the settling time). In another embodiment, the oxygen is replaced by an inert gas, such as nitrogen gas, e.g. by flushing the container with the inert gas, especially by nitrogen. Hence in another embodiment, the method further comprises replacing the oxygen by nitrogen, especially by flushing the container with nitrogen. Hence, the container may be configured to prevent oxygen from entering the mixture in the container, at least during use of the container during the treatment time.

With the seed treatment method described herein, especially good results are obtainable at low oxygen contents in the mixture, especially being less than 3 wt.%, over a substantial part of the treatment time. The pace of oxygen reduction in the mixture may be increased by evacuation of the mixture, but also by the type and amount of substrate mixed in the mixture. Especially, the pace of oxygen reduction in the mixture may be affected by the substrate used. Hence in an embodiment, the substrate for the anaerobic bacteria is selected to provide the oxygen concentration in the gaseous phase in the mixture being at maximum 3 wt.% for at least 75% of the treatment time. Especially the substrate may comprise a carbon source, especially a vegetable carbon source, to provide the required oxygen reduction in the desired pace. Even more especially, the anaerobic bacteria and the substrate for the anaerobic bacteria are selected to provide the oxygen concentration in the gaseous phase in the mixture being at maximum 3 wt.% for at least 75% of the treatment time. Hence, in a further embodiment the method is provided, wherein the substrate for the anaerobic bacteria comprises at least one carbon source selected from the group comprising of a protein, a carbohydrate, a lipid, especially comprising at least 10 wt.% of protein on a dry matter basis.

Good results are obtained by the method of seed treatment, in which a substrate comprising organic material is applied, and a barrier is applied between the (pre-mixture and) mixture and the air. The term organic material does also cover organic material obtained by processing plants, animals or parts thereof, where processing entails more than mere cutting; for example, proteins, lipids and carbohydrates that have been isolated are covered by the term. In one of the embodiments, organic materials such as isolated gluten are also covered by this term. In another embodiment, the term also covers organic materials chosen from a group comprising humus, compost, extracted soya bean meal, bone meal, gelatin and optionally granulated manure. In another embodiment, the substrate comprises products such as extracted rapeseed meal, extracted soya bean meal, gluten, steamed potato peelings and protamylase. The substrate preferably comprises a material chosen from a group comprising proteins, carbohydrates and lipids is preferably non-living biomass. The preferred substrates contain at least 10 wt.% of protein on a dry-matter basis.

In one of the advantageous embodiments of the present invention, the method of seed treatment consists of the introduction of a particulate organic substrate into the matrix, especially the solid matrix, followed by the application of a barrier between the matrix and the air. The term "particulate organic material" is used here to denote a particulate substrate, essentially consisting of particles defined below (such as powders and/or granulates), where the particles contain one or more organic components preferably chosen from a group comprising proteins, carbohydrates and lipids. It has also been found that advantageous results are obtained in particular from a method of seed treatment that consists of the introduction of a particulate protein-containing substrate into the (especially solid) matrix and the application of a barrier between the matrix and the air. The particulate substrate, however, may also be introduced in the liquid matrix, especially is the particulate substrate dissolved easily. In another advantageous embodiment of the present invention, the substrate is therefore in the particulate form. Especially the particles of the substrate introduced into the solid matrix preferably have a d_{3,2} value of about 0.5 µm to 10 mm, especially about 1 µm to 5 mm, and more especially about 0.1 - 5 mm. The d_{3,2} value of a particle is defined as the volume/surface area mean surface or Sauter mean diameter.

Powder is a particulate substrate whose particles can range from very small (for example of the order of magnitude of about 0.5 - 100 µm) to quite large (for example of the order of magnitude of about 0.1 - 1 mm). In the case of a granulate, the particle size can vary for example from about 1 to 10 mm. According to one of the advantageous embodiments of the present invention, the substrate is a granulate. According to another advantageous embodiment of the present invention, the substrate is a powder. According to another advantageous embodiment of the present invention, the substrate comprises a liquid. The term "liquid" is used here to denote a pourable substance comprising one or more components. The person skilled in the art will realize that a liquid can be for example an emulsion, dispersion, solution, aqueous slurry, suspension and the like. An example of the liquids that can be used in the method according to the present invention is milk, such as cow's, calf's, goat's milk, etc. According to one of the advantageous embodiments of the present invention, the liquid or slurry preferably contains at least 10 wt.% of proteins, calculated on a dry-matter basis. According to another advantageous embodiment of the present invention, the liquid or slurry contains at least 10 wt.% of protein and/or at most 90 wt.% of carbohydrates and/or at most 90 wt.% of lipids, on a dry-matter basis, totaling 100 wt.%. In one of the embodiments, the liquid or slurry comprises at least 1 wt.% of carbohydrates and/or lipids on a dry-matter basis, totaling 100 wt.%. If the liquid or slurry contains protein in combination with carbohydrates and/or lipids, then the total amount of carbohydrates and lipids in wt.% is preferably less than about ten times the amount of protein in wt.%. According to another advantageous embodiment of the present invention, the substrate comprises a slurry, such as for example an aqueous slurry of one or more of the following substances: wheat gluten, thick potato sap, protamylase, wheat yeast concentrate and liquid by-products of bio-ethanol production.

The substrate preferably contains one or more organic components (materials) chosen from a group comprising proteins, carbohydrates and lipids (where the particulate protein-containing substrate contains proteins by definition), for example a combination (mixture) of proteins or a combination (mixture) of proteins and binders, or combinations of one or more proteins, carbohydrates and inorganic substances. According to another advantageous embodiment, this substrate comprises at least 10 wt.% of organic components, for example 60 - 100 wt.% of organic components, such as proteins and/or carbohydrates and/or lipids, and preferably in any case at least 10 wt.% of proteins and/or at most 90 wt.% of carbohydrates and/or at most 90 wt.% of lipids, all on a dry-matter basis, totaling 100 wt.%. In one of the embodiments, the liquid comprises at least 1 wt.% of carbohydrates and/or lipids on a dry-matter basis, totaling 100 wt.%. If the substrate contains protein in combination with carbohydrates and/or lipids, then the total amount of carbohydrates in wt.% is preferably less than about ten times the amount of protein in wt.%. Suitable proteins are exemplified by potato protein, protamylase, bone meal and gluten. In one of the embodiments, the term "protein" also covers a combination of proteins. Gluten forms a specific group of proteins, occurring in some seeds and grains. According to one of the preferred embodiments of the present invention, the substrate preferably comprises the particulate or liquid protein- containing substrate, gluten, and - according to another advantageous embodiment of the present invention - the substrate preferably comprises a particulate or liquid protein-containing substrate chosen from wheat gluten, maize gluten and a combination thereof.

According to another preferred embodiment, the substrate comprises other proteins, such as for example potato protein, soya bean protein, bone meal or a combination thereof. According to yet another preferred embodiment, the substrate comprises a combination of glutens, such as for example wheat gluten, maize gluten or a combination thereof, and other proteins, such as for example potato protein, soya bean protein, bone meal or a combination thereof. According to one of the advantageous embodiments of the present invention the substrate comprises especially a particulate or liquid substrate in the form of one or more proteins, with preferably at least about 10 wt.% of protein (on a dry-matter basis), for example with 10 - 30 wt.% of protein. According to one of the advantageous embodiments of the present invention, the substrate is therefore a protein-containing, preferably particulate or liquid, substrate. The term "protein-containing particulate or liquid substrate" denotes here a substrate that both contains protein and is particulate, such as for example a powder or a granulate, or it is a liquid, such as for example an aqueous slurry.

The proteins that are preferred in one of the embodiments are chosen from a group comprising potato protein, wheat protein and microbial protein. A suitable form of protein-containing non-living organic material is protamylase, which is a liquid. Another suitable form of protein-containing non-living organic material is Protapec. Protamylase (or thick potato sap) is one of the substrates obtained in the processing of starch potatoes. It is mixed with soya husks and then dried. The granulate obtained in this way is called Protapec, which is available from the Avebe Company in the Netherlands. Another suitable form of protein-containing non-living organic material is wheat gluten.

Yet another suitable form of protein-containing non-living organic material is a substrate that contains microbial protein. The term "microbial protein" denotes a protein that is obtained from fermentation processes. An example of substrates containing microbial proteins is wheat yeast concentrate, which is obtained from the fermentation of wheat. Microbial protein can also be formed in the fermentation of for example maize, etc. One can therefore use for example wheat yeast concentrate and/or maize yeast concentrate as the protein-containing non-living organic material. According to one of the advantageous embodiments of the present invention, 1 - 50 g of proteins are introduced per liter of matrix. According to one of the advantageous embodiments of the present invention, 1 - 100 g of carbohydrates are introduced per liter of matrix. According to one of the advantageous embodiment of the present invention, 1 - 100 g of lipids are comprised by the substrate. If proteins are used in combination with carbohydrates and/or lipids, then the total amount of carbohydrates and lipids in wt.% is preferably less than about ten times the amount of proteins in wt.%.

One of the advantages of the method according to the present invention is that the substrate can have a known and, furthermore, a constant composition. In addition, the substrate is preferably particulate or liquid, which ensures its easy and uniform distribution in the matrix.

The method may be applied to several kinds of seeds, especially to edible seeds and seeds used in the agriculture. Hence, in an embodiment the seeds are selected from the group consisting of edible seeds, agricultural seeds, and horticulture seeds, especially the seeds are selected from the group consisting of pasture crop seeds, cereals, legume seeds, and horticulture crop seeds. Edible seeds, agricultural seeds and horticultural seeds are known in the art. A non exhaustive list of examples comprises for instance grasses, maize, oats, wheat, clover, peas, sunflower, beans, carrots, rice, quinoa, sugar beets, cabbage, broccoli, tomato, cauliflower, cucumber, pepper, celery, lettuce, beets, spinach, etc..

It may further be advantageous to store the treated seeds (after collecting the seeds) in an environment comprising an oxygen content having a (substantial) value lower than the oxygen content in air. For instance oxygen scavengers may be provided to the (collected and) treated seeds stored in a closed (sealed) container to ensure a low oxygen content in the container. By further enclosing the treated seeds by a seal a new oxygen supply to the seeds may be prevented. In this way, the second phase (especially the phase of the seed treatment starting after the treatment method) is delayed. It may further be advantageous to store the (treated) seeds (before collecting the seeds) in the (treated) mixture.

Based on the invention a (treated) mixture may be provided comprising an aqueous liquid, anaerobic bacteria, a substrate for the anaerobic bacteria and (treated) seeds, especially seeds (being) treated by the method herein, especially comprising an oxygen concentration in a gaseous phase in the mixture being at maximum 3 vol.%, especially equal to or smaller than 2 vol.%, such as equal to or smaller than 1 vol.%, even more especially equal to or smaller than 0.5 vol.%. Especially, such (treated) mixture further comprises a solid material. In embodiments, said seeds (in the (treated) mixture) comprise a ratio of bacteria to pathogens being equal to or larger than 10⁵ : 1. Especially the (treated) mixture comprises at least 10 wt.% (treated) seeds, such as at least 25 wt.% (treated) seeds. Especially an amount of (treated) seeds in the (treated) mixture is selected in the range of 10-95 wt.%.

Herein, especially, the term "treated mixture" may relate to the mixture during the treatment time and/or after said treatment time, especially after said treatment time. Especially, the term "treated seeds" may relate to the seeds during the treatment time and/or after said treatment time, especially after said treatment time.

The term "substantially" herein, such as in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'. The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of' but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

The various aspects discussed in this patent can be combined in order to provide additional advantages. Furthermore, some of the features can form the basis for one or more divisional applications.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1 schematically depicts an embodiment of the method;
Fig. 2 schematically depicts two embodiments and some further aspects of the seed treatment method;
Fig. 3 schematically depicts another embodiment of the method; and
Figs. 4a-c schematically depict some embodiments of ways to prevent oxygen to enter the mixture;
Figs 5a-b schematically depict some further aspects of the method.

### DETAILED DESCRIPTION OF THE EMBODIMENTS

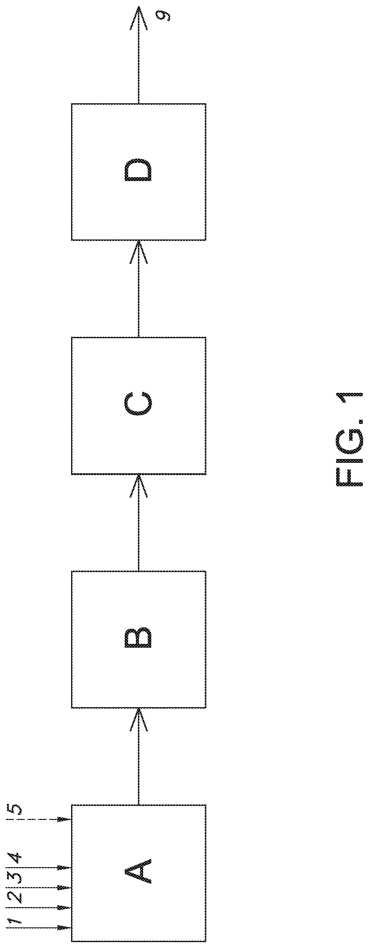

In Fig. 1 schematically the stages of some embodiments of the seed treatment method are depicted: in a first stage (A) a mixture 10 is made comprising the seeds 4 to be treated with an aqueous liquid 2, anaerobic bacteria 1, a substrate 3 for the anaerobic bacteria and optionally a solid material 5. In stage B the active anaerobic environment may be established by having microorganisms in the mixture being fed by the substrate while consuming the oxygen and preventing new oxygen to enter the mixture 10. In the anaerobic environment the anaerobic metabolism cleans the seed. In this stage, stage C, the anaerobic bacteria may feed themselves by the substrate and corpses of aerobic micro-organism killed by anaerobic environment, and the population of anaerobic microorganisms grows. After the anaerobic stage, the treated seeds 9 are separated from the mixture 10 and collected in stage D. The collected and treated seeds may still be covered with a small amount of substrate that when stored in air may feed (a small amount of) aerobic microorganism still present at the seeds and a new and more diversified microorganism population may grow. Hence the method also promotes an antagonistic process after killing of the pathogens. The schematically depicted stages in embodiments may be different in other embodiments. Some embodiment, e.g. comprise a pre-mixing or settling stage (see also below), wherein not all of the components of the starting materials may be introduced in the first stage (A) and wherein initially an anaerobic environment may be established before the seeds are added. In embodiments the bacteria may be provided by one of the other components in the mixture. In yet other embodiments, the bacteria may for instance be provided by an anaerobic inoculum (see also below).

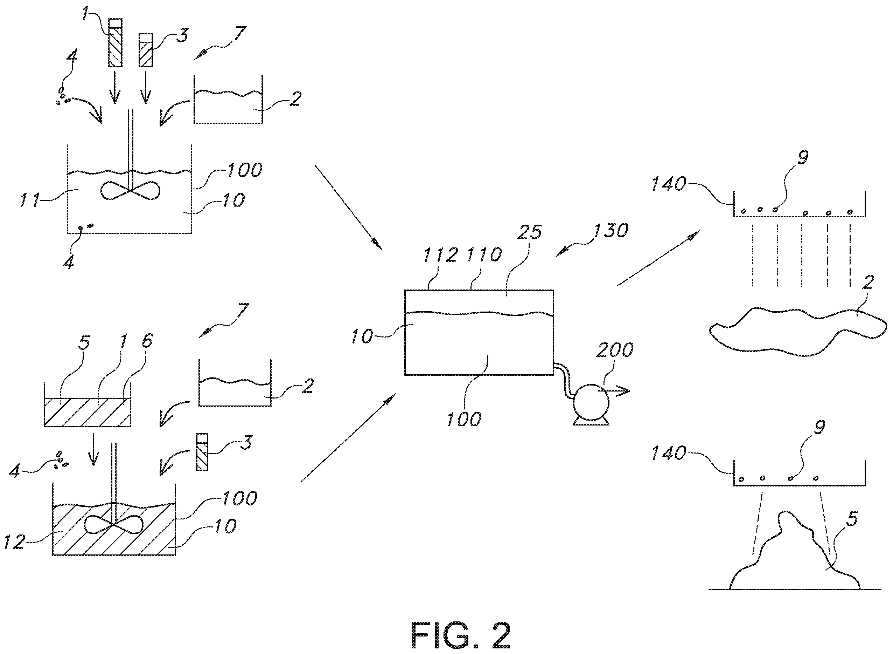

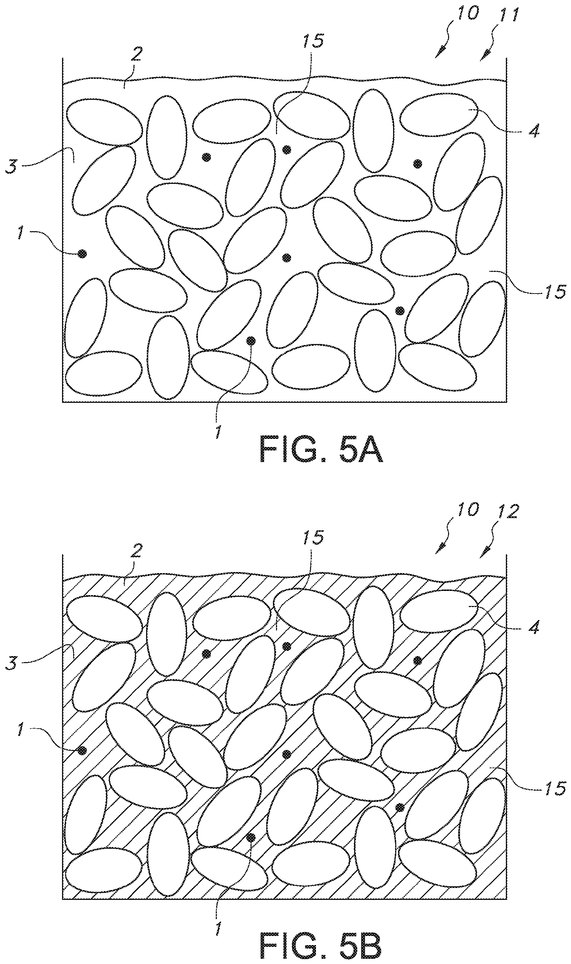

In Fig. 2 schematically an embodiment of the method of the invention is depicted. In the figure at the top side an embodiment comprising a mixture 10 comprising a liquid matrix 11 is depicted, wherein the starting materials 7 comprise an aqueous liquid 2, anaerobic bacteria 1, a substrate 3 for the anaerobic bacteria 1, and especially the amount of aqueous liquid 2 being at least that much that the seeds 4 will be in the mixture 10 and are covered with aqueous liquid (see also figs 5a-5b). The starting materials 7 are mixed with the seeds 4 to provide a mixture 10. Successively the mixture 10 is stored in a condition to prevent oxygen from entering the mixture; in figure 2 schematically depicted by having a lid 112 or any other oxygen barrier 110 hermetically closing the vessel 100 and therewith forming a closed container 130 to prevent oxygen from entering the mixture 10. After a specific treatment time, especially for the liquid matrix being in the range of 12 - 48 hours, the treated seeds 9 are provided and may be collected from the mixture 10, for instance by a sieve 140 separating the treated seeds 9 from the aqueous liquid 2. Further, the pH of the mixture 10 may be selected in the range of 4 - 9, especially in the range of 5 - 8.

At the bottom side of the figure an embodiment comprising a mixture 10 comprising a solid matrix 12 is schematically depicted. In this embodiment the starting materials 7 further comprise a solid material 5, and especially the amount of solid material 5 (in relation to the amount of the aqueous liquid 2 and the seeds 4 is selected to provide a moist (not submerged in the aqueous liquid) mixture 10. In embodiments, the mixture 10, especially comprising solid material 5, comprises an amount of seeds 4 selected in the range of at least 1 wt.% especially at least 5 wt.%. Even more especially at least 10 wt.%, such as 15-50 wt.% of the mixture 10 contains seeds 4. The solid material 5, especially for instance soil 6 that is not dried before use, may already comprise some water or aqueous liquid 2. The solid material 5 may comprise different kinds of solid, especially particulate material, such as sand or soil 6. Especially using soil 6 may be advantageous since the soil 6 may already comprise the anaerobic bacteria 1, and no extra anaerobic bacteria 1 such as in the form of an anaerobic inoculum 1 (see top figure with liquid matrix 11) has to be provided. Next to the solid material 5 also aqueous liquid 2 is required in the mixture 10. However the amount of aqueous liquid is much less. Especially for the solid matrix 12 the treatment time is preferably in range of 3 - 14 days. Optionally, for both the solid and the liquid matrix 10, the container 130 may be evacuated, for instance by a vacuum pump 200, and a pressure below 1 bar may be maintained during at least part of the treatment time to decrease the oxygen content in the mixture 10. Also the used substrate 3 may affect how fast the oxygen concentration decreases in the mixture. Preferably, the substrate 3 for the anaerobic bacteria 1 is selected to provide for at least 75% of the treatment time an oxygen concentration 25 of less than 3% in the gaseous phase in the mixture 10.

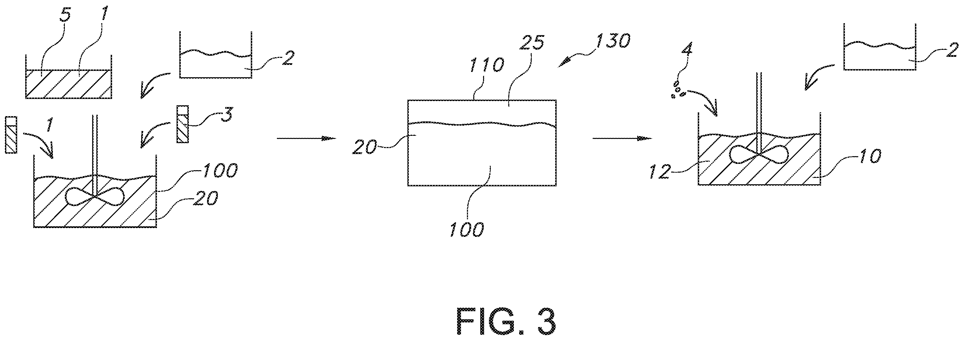

In Fig. 3 an extra settling step is schematically depicted. The stage being introduced to lower the amount of oxygen in the mixture 10 before adding the seeds 4 and to increase the amount of anaerobic bacteria 1 in the mixture 10 / in the solid matrix 12. In this embodiment the solid material 5, the substrate 3 for the anaerobic bacteria, the anaerobic bacteria 1 (being part of the solid material 5 and/or optionally added anaerobic bacteria 1) and at least a part of the amount of aqueous liquid 2 are mixed to provide a pre-mixture 20. The pre-mixture 20, next is stored during a settling time in a condition to prevent oxygen from entering the pre-mixture 20, at least until the oxygen concentration 25 in the gaseous phase of the pre-mixture 20 is less than 3%. The settling time, especially is in the range of 7 - 14 days. In the depicted embodiment, the pre-mixture 20 is stored in a closed container 130 to prevent oxygen to enter. After the settling time, the rest of the amount of the aqueous liquid 2 is mixed with the pre-mixture 20 to provide the mixture 10 and the seeds 4 may be mixed in the mixture 10 (like depicted in figure 2).

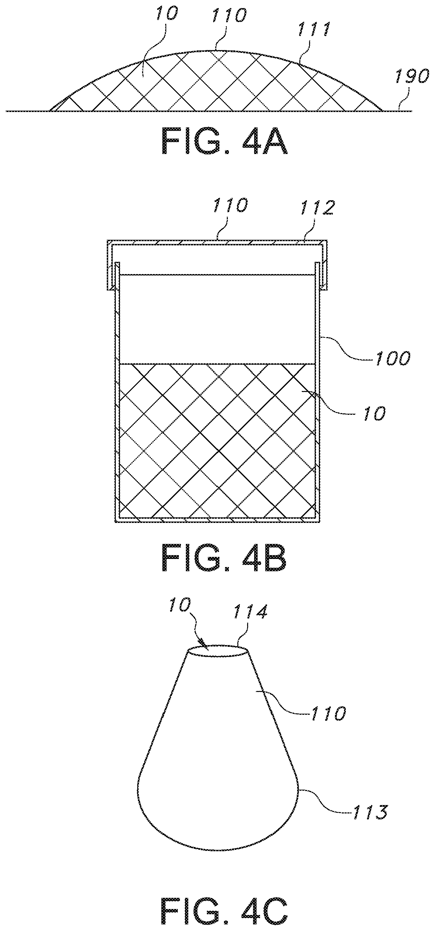

Fig. 4 schematically depicts some possible embodiments of an oxygen barrier (layer) 110 to prevent oxygen to enter the mixture 10 during the treatment. In fig. 4a schematically an embodiment is given wherein the mixture 10 is laid on a surface, for instance the ground 190. A plastic film 111 is configured to be the oxygen barrier 110 and applied by covering the mixture 10. This embodiment may advantageously be applied with a solid matrix 12, wherein for instance the mixture comprises a local soil 6; the seeds 4 may be mixed with the soil 6, an aqueous liquid 2 and a substrate 3 and optionally extra anaerobic bacteria 1 and may be laid on the ground 190 and successively be covered by a barrier 110 to establish the anaerobic environment. In other embodiments the plastic film 111 or other barriers 110 may also be positioned at the surface 190 before laying down the mixture 10, so the barrier 110 may substantially enclose the mixture. In fig. 4b an embodiment is depicted comprising a vessel 100 with a lid 112, wherein the mixture 10 is enclosed. Especially, such an embodiment may be applied for substantially liquid 11 as well as substantially solid 12 mixtures 10. Yet another embodiment is depicted in fig. 4c. In this embodiment, the mixture 10 is substantially enclosed in an enclosure 113 configured as and oxygen barrier 110. At the top of the enclosure 113 an opening 114 is depicted used to fill the enclosure. This opening 114 is shown for clarity only and may be closed during the treatment time. In figure 4 only a few embodiments are depicted exemplifying the method. Many other embodiments are feasible to prevent oxygen to enter the mixture 10 as will be understood by a person skilled in the art. Embodiments may for instance comprise a silo, a container, a place with walls with a concrete floor. For quantities of several tons of seed move-able concrete separation walls of fixed concrete walls may be used to keep one batch separated from another batch. The concrete may be covered with a liner, large enough to cover the walls to prevent oxygen entering the (pre- )mixture. Yet other embodiments may comprise a (grain) silo or ship (a cargo hold).

In Fig. 5a-b schematically some embodiments of the mixture 10 are depicted, especially in relation to the method. In fig. 5a a liquid matrix 11 is schematically depicted comprising the seeds 4 and with a void volume 15 between the seeds 4. In the depicted embodiment substantially 100% of the void volume 15 is comprised by the aqueous liquid 2. Especially the seeds 4 are submerged in the aqueous liquid 2. The mixture 10, further comprises anaerobic bacteria 1 and a substrate 3 in the aqueous liquid 2 (and thus in the void volume 15). The aqueous liquid 2 especially comprises water. Hence, the entire void volume 15 is filled with aqueous liquid 2 comprising anaerobic bacteria 1 and a substrate 3.

In embodiments at least 50% of the void volume 15 comprises the aqueous liquid 2. The remainder of the void volume 15 not comprised by the aqueous liquid 2 may comprise for instance bacteria, substrate, gas (pockets), solid material. Especially the remainder of the void volume 15 may comprise solid material 5, especially one or more of soil 6 and sand. In the embodiment schematically depicted in fig. 5b the void volume 15 further comprises solid material 5. Hence the void volume 15 comprises the aqueous liquid 2, solid material 5, bacteria 1, and substrate 3. In such embodiment also at least 50% of the void volume 15 comprises aqueous liquid 2. However in comparative embodiments comprising a solid matrix 12, less than 50% of the void volume 15 may comprise aqueous liquid 2 and more than 50% of the void volume 15 may comprise solid material 5. In the solid matrix 12, as schematically depicted in Fig. 5b, the seeds 4 may also not have a high packing density (due to the presence of other solids).

### Reference

- 1: anaerobic bacteria
- 2: aqueous liquid
- 3: substrate
- 4: seeds
- 5: solid material
- 6: soil
- 7: starting materials
- 9: treated seeds
- 10: mixture
- 11: liquid matrix
- 12: solid matrix
- 15: void volume
- 20: pre-mixture
- 25: oxygen concentration

- 100: vessel
- 110: oxygen barrier
- 111: plastic film
- 112: lid/closure
- 113: enclosure
- 114: opening
- 130: container
- 140: separator
- 190: ground

- 200: vacuum pump

### EXAMPLES

### Effect different treatments of the invention

The effects of different techniques of seed treatments on different seeds were studied experimentally. Herein the seeds (Spinach, Cauliflower, Brachiaria, and Carrot (two types) have been treated in a liquid matrix and a solid matrix. The air has been evacuated from both matrices after mixing the mixtures, and the techniques are respectively indicates by liquid priming and vacuum bags. In the vacuum-bags, seeds are vacuum packed together with a substrate (comprising protamylase) having a 20% protein content and soil (intrinsically already comprising anaerobic bacteria), wherein about 2.5 grams of protein is added per liter of soil. In the liquid priming experiments, seeds are suspended in a solution of water, the same substrate (2.5 grams of protein per liter of water) and an anaerobic inoculum. The treatment time is varied (<5, 28 and 60 hours) as well as the pH's. Germination improved through liquid-priming except for 60 hours with most extreme pHs. Just as with vacuum-bags, in-house microbiological assay suggested a change in microbial diversity with liquid-priming, especially with treatments of 28 and 60 hours. The germination of the treated seeds have been compared to untreated seeds as well as to federal standards (minimum required percentage that germinate) Also the morphology change because of the treatment is evaluated.

Some of the results are further summarized in the next table. It is concluded that there was a large improvement in germination after certain treatments. Most of the germinations after the treatments were higher than the minimum percentage germination according to federal standards, with the minimum germination to federal standards: spinach=60%, cauliflower=75%, carrot=55%, see "Handbook for vegetable growers", 1988, J.E. Wiley&Sons, Inc.; "Vegetable growing handbook" 1979. Splittstoesser, W.E. AVI Publishing, Inc.; "Seeds, the yearbook of Agriculture" 1961, Stefferud, A., Editor. The United States Government Printing Office. No physically abnormal germination, disorder and discolor of seeds were observed. Apparently no phytotoxicity was observed in any treatment. The reduction in germination after some treatments showed that the treatment effect highly depends on the types of seeds. It also is concluded that small seed types (cauliflower and carrot) do not well reacted to the vacuum bag treatments, whereas this method works better for big seeds with hard seed coat (spinach and Brachiaria). It was also concluded that the optimal treatment time for different types of seeds was different. For Brachiaria seeds, there is no data available for the germination; however research shows that normally new harvest, matured, and undamaged Brachiaria seeds are highly dormant. During the experiment, the tested seed lot showed a germination % around 40% for untreated seeds.

No 100% elimination was obtained by the disinfection, however certain treatments decreased the appearance of fungi during the germination, especially vacuum bag treatment for spinach and Brachiaria seed did. Since cauliflower and carrot seeds were not heavily infested by fungi, only minor disinfection effects are shown after the treatments.

**Table: The effects of the seed treatment**

| Treatment | Seed Type | Treatment time | Germination increase I | Germination increase II: | Morphology |
|---|---|---|---|---|---|
| L | C | 43 hours | +20% | +32% | 42% ->3% |
| S | S | 3 days | +38% | +52% | 42% ->25% |
| S | S | 6 days | +33% | +47% | 42% ->30% |
| L | C | 43 hours | 0% | +23% | 5%-> 1% |
| S | C | 3 days | +3% | +27% | 5%->25% |
| S | C | 6 days | -5% | +16% | 5%->6% |
| L | B | 43 hours | +60% | NA | 51% ->53% |
| S | B | 3 days | +60% | NA | 51% ->32% |
| S | B | 6 days | +85% | NA | 51% ->35% |
| L | CA | 43 hours | +6% | +59% | 2% ->0% |
| S | CA | 3 days | -4% | +44% | 2% ->1% |
| S | CA | 6 days | -16% | +27% | 2% ->0% |
| L | CB | 43 hours | +5% | +52% | 1% ->0% |
| S | CB | 3 days | -2% | +43% | 1%->1% |
| S | CB | 6 days | -36% | -7% | 1%->0% |

In the Table following abbreviations are used, Treatment: L = liquid priming; S = Vacuum bags; Seed: S = Spinach; C = Cauliflower; B = Brachiaria; CA = Carrot, type A; CB = Carrot, type B.
Explanation of the columns: Germination increase I = germination of treated seed compared to germination of un-treated seeds, wherein the germination of the controls were spinach=66%, cauliflower=92%, Brachiaria=20%, carrot A=83%, carrot B=80%
Germination increase II = germination increase of treated seeds compared to minimum germination given by federal standards: spinach=60%, cauliflower=75%, carrot=55%. NA= no data available.

Change in morphology indicating the % of fungi infested seeds before & after treatment.

### Visual microbiological counting

The development of fungi in treated and non-treated seeds after using the seed treatment method was compared. Microorganism morphology was noted in a presence/absence matrix (1/0 table). The categories for which the controls showed the same morphology were isolated. Patterns were found in five categories microorganisms. The treatment changed occurrence of micro-organism in comparison to control. This is also the case for two categories in the treatment with sand instead of soil. Three main expressions of microorganisms are (spontaneously) induced (Opaque wool + Tips, White Wool, Grey Silver spots). This phenomenon is most pronounced at highest moisture levels and longest treatment time (300 hours). Microorganisms are also eradicated (Black spots on seeds, Yellow-Orange veins on blotter paper).

The experiment shows that there is a switch in the typology of fungi expressed before and after the treatment. Non-treated infected seeds express black and grey spots. Treated seeds tend to show white molds, like Opaque wool + Tips, White Wool.

**Table: The effects of the seed treatment on presence/absence of categories microorganism (Opaque wool+ tips and White wool observed as Fuzz on seeds; Grey Silver and Black observed as spots on seeds; and Yellow-Orange Veins (fungi) on paper). Explanation of the columns: presence = 1; absence = 0.**

| | Fuzz on seeds | | Spots on seeds | | Veins on paper |
|---|---|---|---|---|---|
| Treatment | Opaque wool + Tips | White wool | Silver | Black | Yellow-Orange |
| Untreated | 0 | 0 | 0 | 1 | 1 |
| Dry soil | 0 | 0 | 1 | 1 | 0 |
| Soil 6 days treat | 0 | 1 | 1 | 0 | 0 |
| Soil 3 days treat | 0 | 1 | 1 | 0 | 0 |

### Treatment of Brachiaria brizanta tropical grass seed.

A pre-mixture is prepared (or re-used) by mixing liquid substrate with sieved soil in a concrete mixer. In each concrete mixing batch about 20 kg of soil is mixed with liquid substrate to reach a protein content of 3%. Water is added to make the soil moist but below water capacity. No free water is visible after the mixing. If there is too much water, some dry soil is added.

The pre-mixture soil is dumped in a heap on a concrete floor covered with a plastic liner that blocks oxygen well. A second piece of the same type of liner is used to cover the heap and sand bags are used to keep the top liner fixed to the floor. The concrete floor is in the shade, covered by a roof and in a well ventilated area with walls with large openings or no walls to some sides. After 1 week of fermentation the pre-mixture soil can be used for the next step in the process.

Fermented pre-mixture soil of 1 week old is mixed with dry seeds inside a concrete mixer. A calculated amount of water is added to keep the mixture at soil capacity. If a water activity meter is present then the aim is to obtain a water activity of 0.985 or slightly higher. The ratio of seed : pre-mixture is 1:6.

This mixture is again dumped on a concrete floor covered with an oxygen blocking plastic liner. After shaping and compressing the heap a second liner is put over the heap. Sand bags are used to keep the liner in place and fixed on the floor. The mixture is then kept for 6 days under the closed conditions. After the treatment the seeds and the soil is separated by a screen to collect the treated seeds and proceed to preparing them for commercial purposes.

Survivability of treated seeds increased between 10 and 20% compared to the control.

## Claims

1. A seed treatment method comprising: (i) mixing starting materials (7) comprising an aqueous liquid (2), anaerobic bacteria (1), a substrate (3) for the anaerobic bacteria (1), and seeds (4), to provide a mixture (10) having a void volume (15) between the seeds (4), wherein at least 50% of the void volume (15) comprises the aqueous liquid (2), (ii) storing the mixture (10) in a condition to prevent oxygen from entering the mixture (10) during a treatment time, to provide treated seeds (9), wherein the treatment time is at least 6 hours and at maximum 14 days, and (iii) collecting the treated seeds (9) from the mixture (10).

2. The method according to claim 1, wherein the seeds (4) are submerged in the aqueous liquid (2) and wherein the aqueous liquid (2) is water.

3. The method according to any of the preceding claims, wherein the pH of the mixture (10) is selected from the range of 4 - 9.

4. The method according to any of the preceding claims, wherein the treatment time is selected from the range of 12 - 48 hours.

5. The method according to any one of the preceding claims, wherein at least a part of the anaerobic bacteria (1) in the mixture (10) is provided by an anaerobic inoculum.

6. The method according any of the preceding claims, wherein the mixture (10) at least during the treatment time is contained in a container (130) to prevent oxygen from entering the mixture.

7. The method according to claim 6, further comprising evacuating the container (130) and maintaining the container (130) at a pressure below 1 bar during at least part of the treatment time.

8. The method according to any of the preceding claims, wherein the substrate (3) for the anaerobic bacteria (1) comprises at least one carbon source selected from the group comprising of a protein, a carbohydrate, and a lipid.

9. The method according to any one of the preceding claims, wherein the anaerobic bacteria (1) comprise anaerobic bacteria of the phylum of Firmicutes.

10. The method according to any of the preceding claim wherein the minimum dimension of the seeds (4) is selected in the range of 0.1 - 10 mm.

11. The method according to any one of the preceding claims, wherein the seeds (4) are selected from the group consisting of edible seeds, agricultural seeds, and horticulture seeds.

12. The method according to any one of the preceding claims, wherein the seeds (4) are selected from the group consisting of pasture crop seeds, cereals, legume seeds, and horticulture crop seeds.

13. Use of the method according to any of the preceding claims 1-12, for reduction of pathogens at the seeds.

14. Use of the method according to any of the preceding claims 1-12, to improve the germination of the seeds.

15. Use of the method according to any of the preceding claims 1-12, for providing seeds having a ratio of bacteria to pathogens being equal to or larger than at least 10⁵ : 1.

## Patentansprüche

1. Saatgutbehandlungsverfahren, umfassend: (i) Mischen von Ausgangsmaterialien (7), umfassend eine wässrige Flüssigkeit (2), anaerobe Bakterien (1), ein Substrat (3) für die anaeroben Bakterien (1) und Saatgüter (4) zur Bereitstellung einer Mischung (10) mit einem Hohlraumvolumen (15) zwischen den Saatgütern (4), wobei mindestens 50 % des Hohlraumvolumens (15) die wässrige Flüssigkeit (2) umfasst, (ii) Lagern der Mischung (10) in einem Zustand, um zu verhindern, dass während einer Behandlungszeit Sauerstoff in die Mischung (10) eintritt, um behandelte Saatgüter (9) bereitzustellen, wobei die Behandlungszeit mindestens 6 Stunden und maximal 14 Tage beträgt, und (iii) Sammeln der behandelten Saatgüter (9) aus der Mischung (10).

2. Verfahren nach Anspruch 1, wobei die Saatgüter (4) in die wässrige Flüssigkeit (2) getaucht werden und wobei die wässrige Flüssigkeit (2) Wasser ist.

3. Verfahren nach einem der vorstehenden Ansprüche, wobei der pH-Wert der Mischung (10) ausgewählt ist aus dem Bereich von 4-9.

4. Verfahren nach einem der vorstehenden Ansprüche, wobei die Behandlungszeit ausgewählt ist aus dem Bereich von 12-48 Stunden.

5. Verfahren nach einem der vorstehenden Ansprüche, wobei mindestens ein Teil der anaeroben Bakterien (1) in der Mischung (10) durch ein anaerobes Inokulum bereitgestellt wird.

6. Verfahren nach einem der vorstehenden Ansprüche, wobei die Mischung (10) zumindest während der Behandlungszeit in einem Behälter (130) enthalten ist, um zu verhindern, dass Sauerstoff in die Mischung eintritt.

7. Verfahren nach Anspruch 6, weiter umfassend Evakuieren des Behälters (130) und Halten des Behälters (130) bei einem Druck unter 1 bar während mindestens eines Teils der Behandlungszeit.

8. Verfahren nach einem der vorstehenden Ansprüche, wobei das Substrat (3) für die anaeroben Bakterien (1) mindestens eine Kohlenstoffquelle umfasst, die ausgewählt ist aus der Gruppe, umfassend ein Protein, ein Kohlenhydrat und ein Lipid.

9. Verfahren nach einem der vorstehenden Ansprüche, wobei die anaeroben Bakterien (1) anaerobe Bakterien des Firmicutes-Stamms umfassen.

10. Verfahren nach einem der vorstehenden Ansprüche, wobei die Mindestabmessung der Saatgüter (4) ausgewählt ist im Bereich von 0,1-10 mm.

11. Verfahren nach einem der vorstehenden Ansprüche, wobei die Saatgüter (4) ausgewählt sind aus der Gruppe, bestehend aus essbaren Saatgütern, landwirtschaftlichen Saatgütern und gartenbaulichen Saatgütern.

12. Verfahren nach einem der vorstehenden Ansprüche, wobei die Saatgüter (4) ausgewählt sind aus der Gruppe, bestehend aus Weidepflanzen-Saatgütern, Getreiden, Hülsenfrucht-Saatgütern und gartenbaulichen Pflanzen-Saatgütern.

13. Verwendung des Verfahrens nach einem der vorstehenden Ansprüche 1-12 zur Verringerung von Pathogenen an den Saatgütern.

14. Verwendung des Verfahrens nach einem der vorstehenden Ansprüche 1-12 zur Verbesserung der Keimung der Saatgüter.

15. Verwendung des Verfahrens nach einem der vorstehenden Ansprüche 1-12 zur Bereitstellung von Saatgütern mit einem Verhältnis von Bakterien zu Pathogenen, das gleich oder größer ist als mindestens 10⁵:1.

## Revendications

1. Procédé de traitement de graine comprenant : (i) le mélange de matières premières (7) comprenant un liquide aqueux (2), des bactéries anaérobies (1), un substrat (3) pour les bactéries anaérobies (1), et des graines (4), pour fournir un mélange (10) présentant un volume de vide (15) entre les graines (4), dans lequel au moins 50 % du volume de vide (15) comprend le liquide aqueux (2), (ii) le stockage du mélange (10) dans une condition pour empêcher l'oxygène de pénétrer dans le mélange (10) pendant un temps de traitement, pour fournir des graines traitées (9), dans lequel le temps de traitement est d'au moins 6 heures et d'au maximum 14 jours, et (iii) la collecte des graines traitées (9) à partir du mélange (10).

2. Procédé selon la revendication 1, dans lequel les graines (4) sont immergées dans le liquide aqueux (2) et dans lequel le liquide aqueux (2) est de l'eau.

3. Procédé selon l'une quelconque des revendications précédentes, dans lequel le pH du mélange (10) est sélectionné dans la plage de 4 - 9.

4. Procédé selon l'une quelconque des revendications précédentes, dans lequel le temps de traitement est sélectionné dans la plage de 12 - 48 heures.

5. Procédé selon l'une quelconque des revendications précédentes, dans lequel au moins une partie des bactéries anaérobies (1) dans le mélange (10) est fournie par un inoculum anaérobie.

6. Procédé selon l'une quelconque des revendications précédentes, dans lequel le mélange (10), au moins pendant le temps de traitement, est contenu dans un contenant (130) pour empêcher l'oxygène de pénétrer dans le mélange.

7. Procédé selon la revendication 6, comprenant en outre l'évacuation du contenant (130) et le maintien du contenant (130) à une pression inférieure à 1 bar pendant au moins une partie du temps de traitement.

8. Procédé selon l'une quelconque des revendications précédentes, dans lequel le substrat (3) pour les bactéries anaérobies (1) comprend au moins une source de carbone sélectionnée parmi le groupe comprenant une protéine, un glucide, et un lipide.

9. Procédé selon l'une quelconque des revendications précédentes, dans lequel les bactéries anaérobies (1) comprennent des bactéries anaérobies du phylum des Firmicutes.

10. Procédé selon l'une quelconque des revendications précédentes dans lequel la dimension minimale des graines (4) est sélectionnée dans la plage de 0,1 - 10 mm.

11. Procédé selon l'une quelconque des revendications précédentes, dans lequel les graines (4) sont sélectionnées parmi le groupe constitué de graines comestibles, de graines agricoles, et de graines horticoles.

12. Procédé selon l'une quelconque des revendications précédentes, dans lequel les graines (4) sont sélectionnées parmi le groupe constitué de graines de culture de pâturage, de céréales, de graines de légumineuses, et de graines de culture horticole.

13. Utilisation du procédé selon l'une quelconque des revendications précédentes 1-12, pour la réduction d'agents pathogènes au niveau des graines.

14. Utilisation du procédé selon l'une quelconque des revendications précédentes 1-12, pour améliorer la germination des graines.

15. Utilisation du procédé selon l'une quelconque des revendications précédentes 1-12, pour fournir des graines présentant un rapport des bactéries sur des agents pathogènes supérieur ou égal à au moins 10⁵:1.
